# EUROPÄISCHE PATENTANMELDUNG

(11) **EP 1 830 444 A1**
(43) Veröffentlichungstag der Anmeldung: **05.09.2007**
(21) Anmeldenummer: 07003292.5
(22) Anmeldetag: 16.02.2007
(51) Int. Cl.: H02B 1/38

(54) **Schaltschrank**

(30) Priorität: 04.03.2006 DE 102006010011
(71) Anmelder: Rittal GmbH & Co. KG, 35745 Herborn (DE)
(72) Erfinder: Stock, Thomas, 35447 Reiskirchen (DE); Gutierrez, Juan, 35745 Herborn (DE); Laurösch, Sven Michael, 35708 Haiger (DE); Hartel, Marc, 35447 Reiskirchen (DE)
(74) Vertreter: Fleck, Hermann-Joseph

(57) **Zusammenfassung**

Die Erfindung bezieht sich auf einen Schaltschrank mit Verkleidungsteilen (7, 8) und mindestens einer Schranktür (1) aus Türblatt (3) und Türrahmen (2), der aus zwei Vertikalprofilen (20) und zwei Horizontalprofilen (30) gebildet ist Eine vorteilhafte Nutzung des Türrahmens wird dadurch erreicht, dass in dem Türrahmen (2) ein auf seiner zur Schrankinnenseite gekehrten Rückseite offener oder mit einer abnehmbaren Abdeckung (50) versehener Kabelkanal (10) ausgebildet ist (Fig. 4).

## Beschreibung

Die Erfindung bezieht sich auf einen Schaltschrank mit Verkleidungsteilen und mindestens einer Schranktür aus Türblatt und Türrahmen, der aus zwei Vertikalprofilen und zwei Horizontalprofilen gebildet ist.

Ein derartiger Schaltschrank mit Verkleidungsteilen und einer mit einem Rahmen versehenen Tür ist in der DE 28 47 994 C2 angegeben. Der Rahmen ist hierbei aus auf Gehrung geschnittenen Abschnitten eines Rahmenprofils zusammengesetzt, wobei in den Eckbereichen Eckverbinder in das Rahmenprofil eingesetzt werden, um die Rahmenprofilabschnitte gegeneinander zu verspannen und festzuhalten. In den lichten Bereich des Rahmenprofils liegenden Innenseiten der Rahmenprofile sind Nuten eingearbeitet, in die ein Türblatt eingesetzt werden kann. Auf der dem Schaltschrankinneren zugekehrten Rückseite des Rahmens sind Scharnierteile und Dichtungselemente eingebracht, so dass die Tür dicht z.B. an entsprechenden Stegen eines Rahmengestelles verschlossen werden kann.

Der Erfindung liegt die Aufgabe zugrunde, einen Schaltschrank der eingangs genannten Art bereitzustellen, bei dem der Türrahmen zum Erfüllen der Schaltschrankfunktionen verbesserte Möglichkeiten bietet.

Diese Aufgabe wird mit den Merkmalen des Anspruches 1 gelöst. Hierbei ist vorgesehen, dass in dem Türrahmen ein auf seiner zur Schrankinnenseite gekehrten Rückseite offener oder mit einer abnehmbaren Abdeckung versehener Kabelkanal ausgebildet ist.

An der Tür vorgesehene elektrische oder elektronische Komponenten können mit diesen Maßnahmen mit elektrischem Strom versorgt werden, wobei die Kabel nicht auftragen, nicht stören und definiert geführt sind und dabei gut zugänglich untergebracht sind und auch optisch praktisch nicht in Erscheinung treten.

Ist dabei vorgesehen, dass der Kabelkanal in dem Türrahmen in zumindest einem Vertikalprofil und zumindest einem Horizontalprofil ausgebildet ist, wobei ein jeweiliger fortlaufender Übergang zwischen dem Kabelkanal des Vertikalprofils und des Horizontalprofils geschaffen ist, so ergeben sich vorteilhafte Zuführungs- und Abgriffmöglichkeiten für die elektrische Energie. Beispielsweise ist vorteilhaft, wenn der Kabelkanal auch im Vertikalprofil im Bereich einer die Türscharniere aufweisenden Seite ausgebildet ist, da damit Anschlusskabel aus dem Schaltschrankinnern problemlos zugeführt werden können.

Vorteilhafte Übergänge in den Ecken des Rahmens werden dadurch erreicht, dass der jeweilige Übergang des Kabelkanals vermittels eines mit einem angepassten Abschnitt des Kabelkanals versehenen Eckstückes oder durch Gehrungsschnitt von Vertikalprofil und Horizontalprofil gebildet ist.

Für die Unterbringung der Kabel und die Ausbildung des Rahmens sind des Weiteren die Maßnahmen von Vorteil, dass der Kabelkanal im Querschnitt viereckig mit zwei rechtwinklig zu der Türebene gerichteten Seitenwandabschnitten und einer parallel zur Türebene liegenden, von der Öffnungsebene des Kabelkanals zur von der Schaltschrankinnenseite abgekehrten Frontseite der Tür hin beabstandeten Basiswand ausgebildet ist.

Eine geschützte Unterbringung und einfache Handhabung einer Abdeckung wird dadurch erreicht, dass entlang einem oder beider die Öffnungsseite des Kabelkanals begrenzender Ränder eine oder zwei längs verlaufende Haltenuten zum Einstecken eines oder beider Ränder der Abdeckung ausgebildet ist/sind und/oder dass entlang einem oder beider die Öffnungsseite begrenzender Ränder eine oder zwei längs verlaufende Haltestege ausgebildet sind und dass die Abdeckung in die mindestens eine Haltenut und/oder an dem mindestens einen Haltesteg einschnappbar ist.

Für die Montage des Türrahmens und freie Zugänglichkeit des Kabelkanals sind des Weiteren die Maßnahmen von Vorteil, dass der Türrahmen auf seiner den lichten Bereich umgebenden Innenseite mit einer umlaufenden Aufnahmenut versehen ist, in die ein scheibenförmiges Türblatt eingesetzt ist.

Eine vorteilhafte, stabile und ungehinderte, nicht störende Anbringung einer Scharnierung wird dadurch erreicht, dass der Türrahmen auf seiner von dem lichten Rahmenbereich abgelegenen Außenseite mit einer flachen Außenseitenfläche versehen ist, in der mindestens zwei Aussparungen zum jeweiligen Einsetzen eines Scharniers eingearbeitet sind.

Ist vorgesehen, dass die Aussparungen in einem jeweiligen Eckstück angeordnet sind, so können vorgefertigte Eckstücke vorbereitet werden, während die Rahmenprofile außer der Ablängung nicht weiter bearbeitet werden müssen.

Für die optische Gestaltung und Funktionsfähigkeit können weitere Vorteile dadurch erhalten werden, dass die beiden Vertikalprofile in Bezug auf die beiden Horizontalprofile unterschiedliche Querschnittsgestaltung besitzen.

Die Montagemöglichkeiten, Stabilität und optische Gestaltung werden des Weiteren dadurch begünstigt, dass die Vertikalprofile und die Horizontalprofile auf ihrer von dem lichten Rahmenbereich abgelegenen Außenseite in von der Rahmen-Rückseite zur Rahmen-Frontseite gemessener Dickenrichtung eine größere Abmessung besitzen als auf ihrer dem lichten Rahmenbereich zugekehrten Innenseite.

Eine weitere Gestaltungsvariante des Türrahmens wird dadurch erhalten, dass die Abmessungen der Außenseite der Vertikalprofile in Bezug auf diejenigen der Außenseite der Horizontalprofile in Dickenrichtung größer sind.

Eine vorteilhafte optische Ausgestaltung und ein Vermeiden von Kanten auf der Frontseite bzw. zusätzliche Montagemöglichkeiten werden dadurch erreicht, dass der Übergang der Vertikalprofile und/oder der Horizontalprofile auf deren Frontseite von der Außenseite zur Innenseite im Querschnitt konvex nach außen gewölbt verläuft oder zumindest abschnittsweise flach ist und dass die Profile auf ihrer Rückseite flach ausgebildet sind und glatt ineinander übergehen. Hierbei ergeben sich auf der Rückseite des Türrahmens keine störend abstehenden Abschnitte.

Zu einem stabilen, Material sparenden Aufbau des Türrahmens tragen die Maßnahmen bei, dass die Vertikalprofile und die Horizontalprofile außer dem Kabelkanal zumindest eine weitere Profilkammer aufweisen, die geschlossen ist.

Mit den Maßnahmen, dass die Vertikalprofile an den die Außenseitenfläche aufweisenden Außenwandabschnitt innen angrenzend mit einer Hohlkammer versehen ist, die zur Frontseite im Querschnitt höckerförmig vorspringt und dass auch die Querschnittsform des gegebenenfalls vorhandenen Eckstücks in einem Vertikalschenkel entsprechenden Querschnitt besitzt, wird eine hohe Stabilität des Türrahmens unterstützt.

Dabei ergeben die weiteren Maßnahmen, dass die Scharniere mit Lagerzapfen oder eingebrachten Lageraugen im höckerförmigen Bereich des Hohlraums gelagert ist, eine günstige Verschwenkbarkeit der Tür beispielsweise um 180°, wenn der höckerförmige Bereich z.B. über die Vorderseite der Türöffnung vorsteht.

Die Erfindung wird nachfolgend anhand von Ausführungsbeispielen unter Bezugnahme auf die Zeichnungen näher erläutert. Es zeigen:
- Fig. 1: eine Tür mit Türrahmen und Türblatt in perspektivischer Ansicht,
- Fig. 2A und 2B: die Tür nach Fig. 1 in Frontansicht und in einer Ansicht von oben,
- Fig. 3: die Tür nach Fig. 1 in Rückansicht,
- Fig. 4: einen Ausschnitt eines Vertikalprofils der Tür nach Fig. 1 in perspektivischer Ansicht und im Querschnitt,
- Fig. 5: einen Ausschnitt eines Horizontalprofils der Tür nach Fig. 1 in perspektivischer Ansicht und im Querschnitt,
- Fig. 6: einen Eckbereich eines Schaltschrankes mit teilweise geöffneter Tür nach Fig. 1 in perspektivischer Ansicht,
- Fig. 7A und 7B: einen Eckbereich eines Türrahmens nach Fig. 1 mit einem separaten Eckstück und mit Gehrungsschnitt im Eckbereich in perspektivischer Ansicht,
- Fig. 8: einen Eckbereich des Rahmens nach Fig. 7A in auseinander genommener Darstellung in perspektivischer Vorderansicht,
- Fig. 9: den Eckbereich des Türrahmens nach Fig. 8 in zusammengesetzter perspektivischer Vorderansicht,
- Fig. 10: den Eckbereich des Türrahmens nach Fig. 8 in auseinander genommener perspektivischer Darstellung von der Rückseite und
- Fig. 11: den Eckbereich des Türrahmens nach Fig. 10 in zusammengesetzter Darstellung.

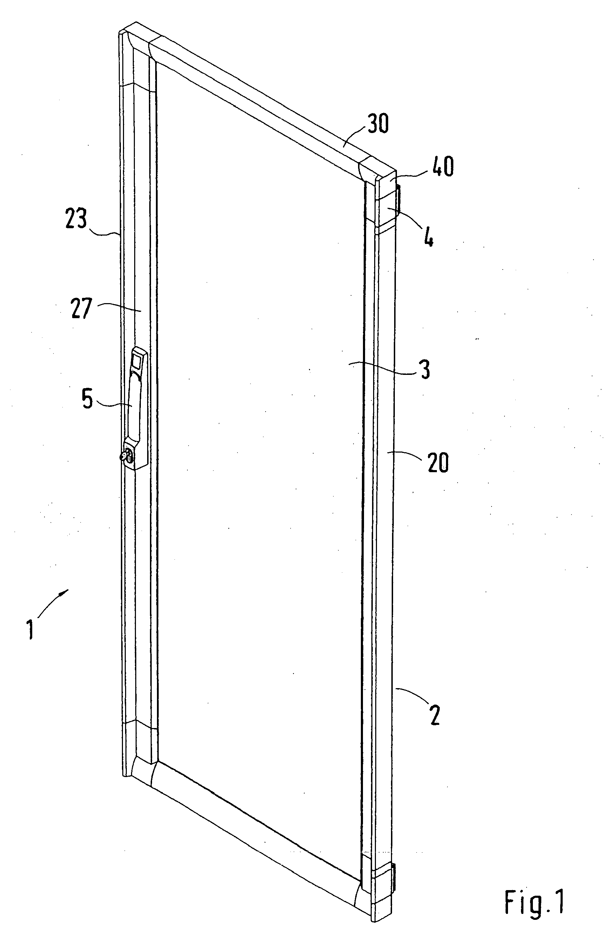

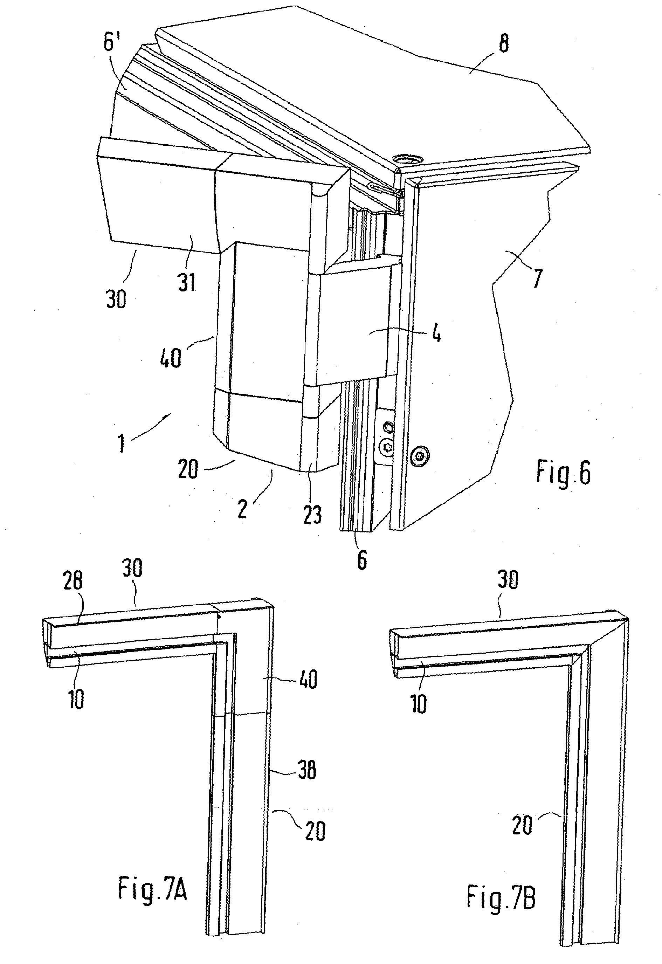

Fig. 1 zeigt eine Tür 1 für einen Schaltschrank mit einem in einem Türrahmen 2 aufgenommenen Türblatt 3, beispielsweise einer durchsichtigen Glasscheibe oder eines sonstigen, gewünschtenfalls auch undurchsichtigen Materials. Auf der von der Schrankinnenseite (vgl. Fig. 6) abgekehrten Frontseite des Türrahmens ist auf einem der beiden Vertikalprofile 20 ein Außenteil eines Verschlusses 5 angebracht, während auf der anderen Vertikalseite, und zwar auf der von dem lichten Rahmenbereich, in den das Türblatt 3 eingesetzt ist, abgelegenen vertikalen Außenseite 25 im Bereich eines oberen und eines unteren Eckstückes 40 Scharniere 4 angebracht sind. Auch an den beiden anderen Ecken zwischen einem oberen und unteren Horizontalprofil 30 und dem betreffenden Vertikalprofil 20 sind Eckstücke 40 eingesetzt.

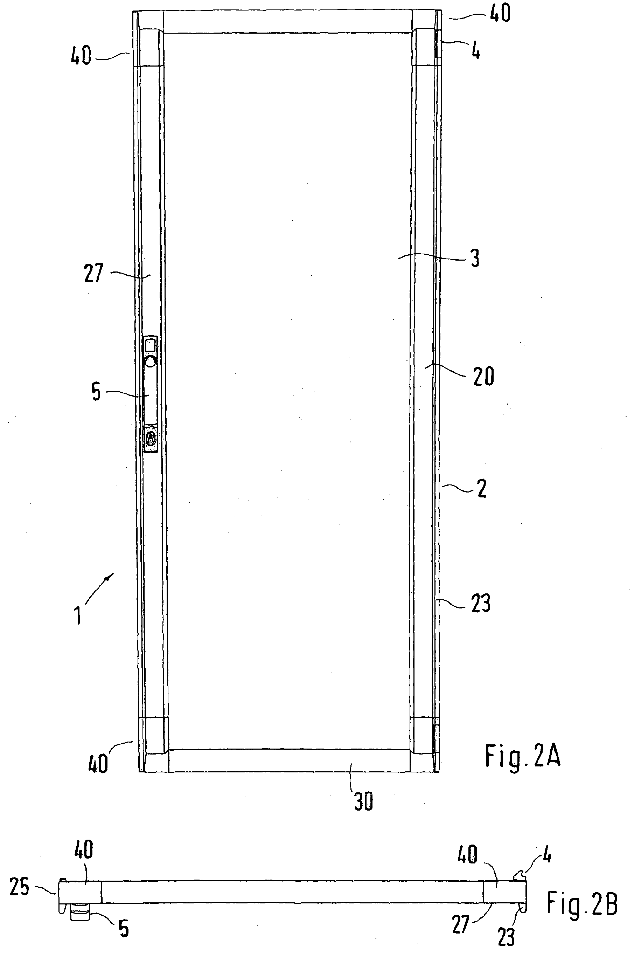

Fig. 2A zeigt die Tür 1 nach Fig. 1 in Vorderansicht, während Fig. 2B die Tür nach Fig. 1 in einer Ansicht von oben zeigt. Hierbei ist auch ersichtlich, dass die beiden Vertikalprofile 20 angrenzend an die flache jeweilige Außenseitenfläche 25 einen nach vorne höckerförmig vorstehenden Profilabschnitt 23 aufweisen, an den sich ein flacher Profilabschnitt 27 anschließt, der vorteilhafte Montagemöglichkeiten beispielsweise für den Verschluss 5 bietet. Der höckerförmige Profilabschnitt 23 trägt zur Stabilität und Verwindungssteifigkeit bei und ergibt zudem eine weit nach vorn gelagerte Anordnung des Scharnierdrehpunkts, so dass die Tür, wie sich Fig. 6 entnehmen lässt, ungehindert weit (z.B. um 180° oder mehr) geöffnet werden kann.

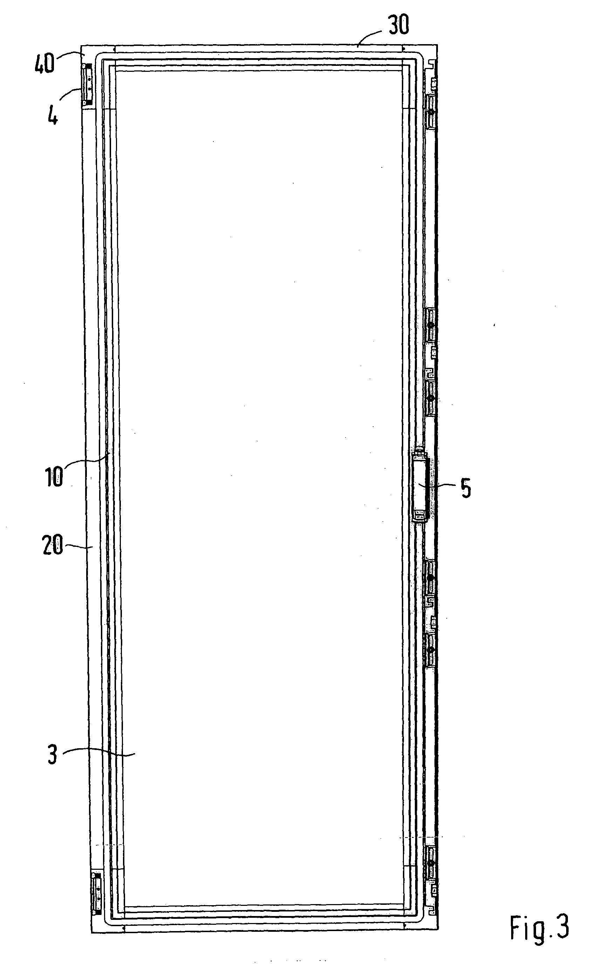

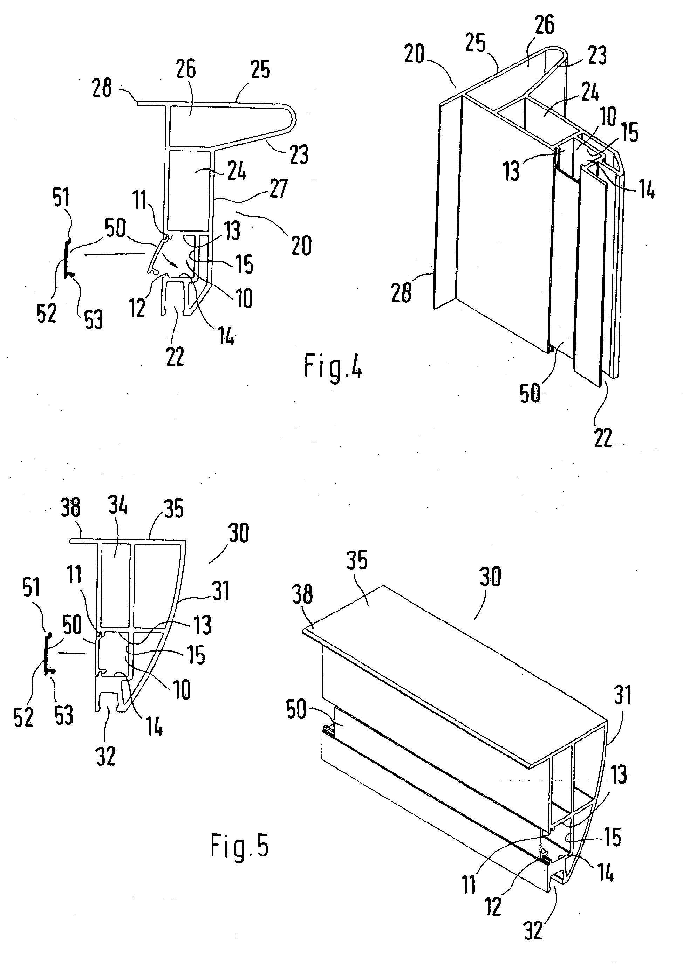

Fig. 3 zeigt die Tür 1 von ihrer dem Schaltschrankinneren zugewandten Rückseite, wobei die innen liegenden Verschlusselemente des Verschlusses 5 und ebenfalls die Scharniere 4 ersichtlich sind. Außerdem ist ein umlaufender Kabelkanal 10 erkennbar, der zur Innenseite des Türrahmens 2 geöffnet oder öffenbar mit einer Abdeckung (vgl. Fig. 4 und 5) versehen ist und über die Länge der Vertikalprofile 20 und der Horizontalprofile 30 verläuft, wobei eine Verbindung über die Eckstücke 40 hergestellt ist.

In Fig. 4 sind die Vertikalprofile 20 perspektivisch in einem Ausschnitt und im Querschnitt detaillierter dargestellt. An die von dem lichten Bereich des Rahmens abgekehrte flache Außenseite 25 schließt sich zur Innenseite hin der zur Frontseite höckerförmig vorstehende, frontseitig im Querschnitt gerundete Profilabschnitt 23 an, der eine Hohlkammer 26 umgibt, die zur Rückseite des Vertikalprofils 20 hin mit einem flachen Wandabschnitt abgeschlossen ist, welcher sich bis zur den lichten Bereich umgebenden Innenseite erstreckt und nur von der Öffnungsseite des Kabelkanals 10 unterbrochen ist, in dessen Öffnungsseite eine Abdeckung 50 bündig zur Innenfläche eingesetzt ist. Die flache Außenseitenfläche 25 bzw. Außenwandung, die in rechtem Winkel zur Rückseite und damit auch zur Ebene der Tür gerichtet ist, setzt sich über die Innenfläche hinaus mit einem freien Endabschnitt 28 fort. An den höckerförmigen Profilabschnitt 23 zur Innenseite hin schließt sich der flache Profilabschnitt 27 an, der parallel zur flachen Rückseite des Profils bzw. der Türebene verläuft und über eine Schräge zu der den lichten Bereich umgebenden Innenseite des Vertikalprofils übergeht. Auf der Innenseite des Profils ist eine zu dem lichten Bereich hin offene Aufnahmenut 22 zum Aufnehmen des Randes des Türblattes 3 angeordnet, so dass dieses gegebenenfalls unter Einsatz einer Dichtung stabil aufgenommen wird, indem die vertikalen und horizontalen Rahmenprofilabschnitte von außen senkrecht zum Rand des Türblattes 3 in Richtung der Türebene aufgeschoben und mittels der Eckverbinder 40 zu dem fertigen Rahmen ergänzt werden. Zur Frontseite hin ist der vordere Nutschenkel von der Wandung des flachen Profilabschnittes zusätzlich abgestützt. An den Nutgrund der Aufnahmenut 22 schließt sich ein Seitenwandabschnitt 14 des Kabelkanals 10 an, dessen Basiswand 15 parallel zur Türebene und auch zu dem flachen Profilabschnitt 27 sowie der flachen Rückseite des Profils erstreckt. Der andere Seitenwandabschnitt des im Querschnitt rechteckförmigen Kabelkanals begrenzt gleichzeitig eine rechteckförmige Profilkammer 24, die von der Rückseite des Profils bzw. der dort vorhandenen Rückwand und zur Frontseite hin von dem flachen Profilabschnitt 27 begrenzt wird und mit einer weiteren Kammerwand von der Hohlkammer 26 getrennt ist. Im Randbereich der Öffnung des Kabelkanals ist der eine Seitenwandabschnitt 13 mit einer längs und parallel zur Rückseite verlaufenden Haltenut 11 versehen, während der gegenüberliegende andere Seitenwandabschnitt 14 mit einem der Nut gegenüberliegenden, ebenfalls längs verlaufenden Haltesteg 12 versehen ist. In die Haltenut 11 wird die Abdeckung 50 mit einem um die Dicke des außen liegenden Nutschenkels gegenüber der Abdeckfläche 52 zurück versetzten Steckrand 51 eingesetzt, wobei dieses Einsetzen schräg in die Nut erfolgt, wobei das Spiel des Steckrandes 51 oder aber die Elastizität der Abdeckung 50 genügend groß ist, um ein schräges Einsetzen zu ermöglichen. Der andere Längsrand der Abdeckung 50, der dem Haltesteg 12 zugekehrt ist, ist mit einem Schnapprand 53 versehen, der eine Einführschrägeoder Einführrundung und eine an den Haltesteg 12 angepasste Schnappnut aufweist. Zum Einschnappen ist die Abdeckung 50 im Bereich des Schnapprandes 53 und/oder des Abdeckabschnittes 52 ausreichend elastisch, insbesondere wenn die Abdeckung aus Kunststoff besteht.

Fig. 5 zeigt die Horizontalprofile 30 detaillierter und zwar stückweise in einer perspektivischen Ansicht und im Querschnitt. Auch hierbei ist die von dem lichten Bereich des Rahmens abgekehrte Außenseitenfläche 35 flach ausgebildet und steht rechtwinklig zu der ebenfalls flach ausgebildeten Rückseite, die parallel zur Türebene ausgerichtet ist. Die flache Außenseitenfläche 35 bzw. der sie aufweisende Außenwandabschnitt steht ebenfalls über einen freien Endabschnitt 38 über die Rückseitenfläche vor. Am vorderen Rand geht die Außenseitenfläche 35 in eine konvex nach außen gewölbte Frontseite 31 über, die bis zu dem frontseitigen Schenkel einer Aufnahmenut 32 für das Türblatt 3 auf der den lichten Rahmenbereich begrenzenden Innenseite reicht und mehrere Kammern auf der Vorderseite überspannt. Die Aufnahmenut 32 liegt in derselben Ebene wie die Aufnahmenut 22 der Vertikalprofile und ist von einem rückseitigen Schenkel auf der zur Schrankinnenseite liegenden Rückseite des Horizontalprofils 30 nach innen begrenzt. Auch der Kabelkanal 10 ist im Querschnitt rechteckförmig entsprechend dem Kabelkanal in den Vertikalprofilen 20 ausgebildet, wobei der eine Seitenwandabschnitt 14 von der Rückseite der Aufnahmenut 32 begrenzt wird und der andere Seitenwandabschnitt 13 eine rechteckförmige Profilkammer 34 zur Innenseite hin begrenzt, die auf der Außenseite von der Außenwandung zur Außenseitenfläche 35 hin begrenzt wird. Die Öffnungsseite und die Basiswand 15 des Kabelkanals 10 liegen in derselben Ebene parallel zur Türebene wie bei den Vertikalprofilen 20 und die Öffnungsseite ist in derselben Weise wie bei den Vertikalprofilen 20 von der Abdeckung 50 abgedeckt, die mit entsprechenden Haltemitteln, Haltenut 11 und Haltesteg 12 fixiert ist. Die frontseitige Begrenzungswand der rechteckförmigen Profilkammer 34 liegt in derselben Ebene parallel zur Türebene wie die Basiswand 15 des Kabelkanals 10. Frontseitig des Kabelkanals 10 und der Profilkammer 34 ergeben sich damit zwei weitere mit einem Steg voneinander getrennte Hohlkammern, die zur Verstärkung des Horizontalprofils beitragen.

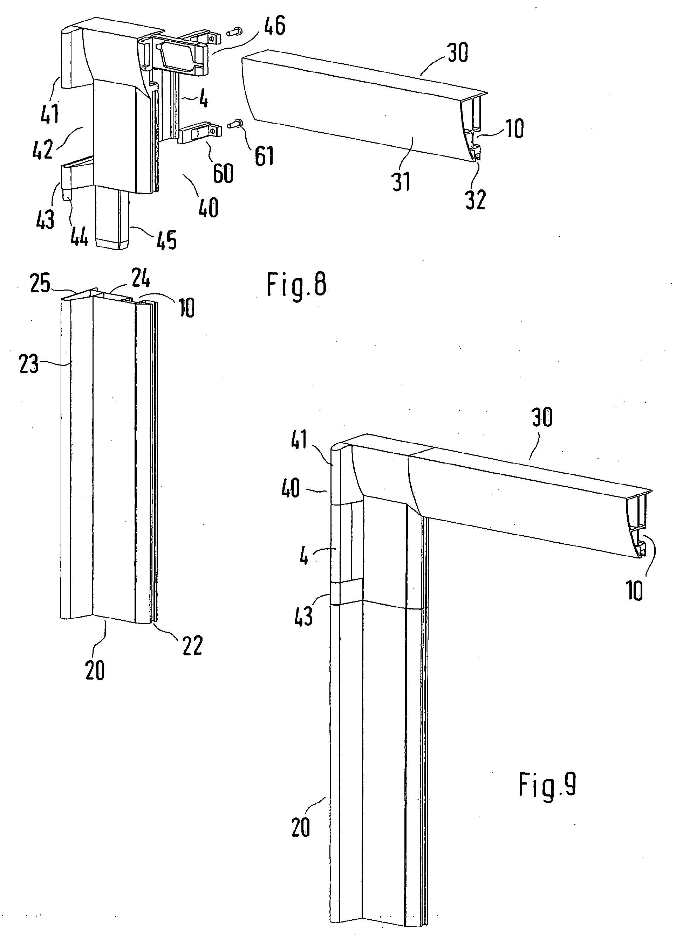

Fig. 6 zeigt einen eingebauten Zustand der Tür 1 an einem Schaltschrank, wobei der Türrahmen 2 über Scharniere 4 mit einem Rahmengestell 6 aus horizontalen und vertikalen Rahmenschenkeln 6, 6' mit dem Schrankkorpus schwenkbar verbunden ist. Der Schrankkorpus ist mit Verkleidungselementen, insbesondere Seitenwänden 7 und einer Deckwand 8 und gegebenenfalls einer (nicht dargestellten) Rückwand, sofern diese nicht selbst als Tür ausgebildet ist, vorzugsweise dicht verschlossen. Das Scharnier 4 ist im Bereich des Eckstückes 40 an dem Türrahmen 2 angebracht und über ein massives Zwischenstück und einen schrägen Anschlussabschnitt an einer schräg zur Außenkante verlaufenden Montagefläche des vertikalen Rahmenschenkels in einem im Kantbereich gebildeten Freiraum angeschraubt. Im Bereich des Scharniers 4 ist in dem Eckstück 40 auf dessen Außenseite eine Aussparung 42 (vgl. Fig. 8) eingebracht. Die Gelenkachse ist in dem zur Frontseite vorstehenden höckerförmigen Profilabschnitt 23 des Eckstückes, der bündig in den höckerförmigen Profilabschnitt 23 des Vertikalprofils 20 übergeht, und zwar im Bereich der frontseitigen Rundung angeordnet. Die höckerförmigen Profilabschnitte 23 des Eckstücks 40 sind als höckerförmiger oberer Lagerabschnitt 41 und höckerförmiger unterer Lagerabschnitt 43 ausgebildet, wie Fig. 8 zeigt.

Fig. 7A zeigt einen Eckbereich des Türrahmens 2 von der Rückseite, wobei das betreffende Vertikalprofil 20 und Horizontalprofil 30 über das betreffende Eckstück 40 miteinander verbunden sind. Ersichtlich setzt sich der Kabelkanal 10 des Vertikalprofils 20 über einen vertikalen und einen horizontalen Kanalabschnitt des Eckstücks 40 fortlaufend in den Kabelkanal des Horizontal profils 30 fort. Die freien Endabschnitte 28 und 38 des Vertikalprofils 20 und des Horizontalprofils 30 setzen sich ebenfalls über einen daran anschließenden vertikalen und horizontalen freien Endabschnitt des Eckstückes 40 fort und bilden einen rundum geschlossenen Rand, der z.B. zur Anlage bzw. Schutz von Montageelementen oder einer Dichtung auf der Rückseite genutzt werden kann. Bei der Ausführung nach Fig. 7B sind das Vertikalprofil 20 und das Horizontalprofil 30 über einen Gehrungsschnitt miteinander verbunden, so dass der Kabelkanal 10 von dem Vertikalprofil 20 ebenfalls fortlaufend in den Kabelkanal des Horizontalprofils 30 übergeht.

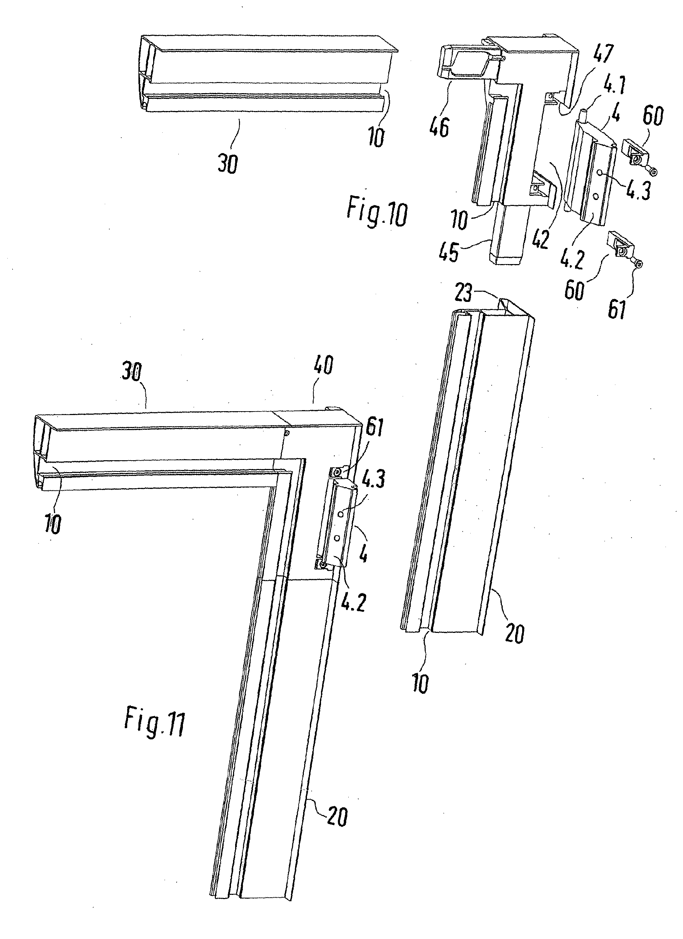

Wie Fig. 8 zeigt, erfolgt die Verbindung des Eckstücks 40 mit dem Horizontalprofil 30 und dem Vertikalprofil 20 mittels an dem Eckstück 40 angebrachter Haltezapfen 45, 46, die an den Querschnitt der Profilkammer 24 des Vertikalprofils 20 bzw. der Profilkammer 34 des Horizontalprofils 30 angepasst und an ihrem Ende zum leichten inführen angeschrägt sind. Mittels einer quer zur Steckrichtung eingedrehten Schraube oder durch Kleben oder Schweißen erfolgt eine sichere Fixierung. Mittels eines weiteren zapfenartigen Halteelementes 44 an dem Eckstück 40, das in den höckerförmigen Profilabschnitt 23 des Vertikalprofils 20 eintaucht, ergibt sich eine weitere Stabilisierung. In der Aussparung 42 wird das Scharnier 4 mittels Lagerstücken 60 gesichert und drehbar gelagert, wobei die Lagerstücke 60 mittels Befestigungselementen 61 in Form von Schrauben festgelegt werden und von der Rückseite aus in den höckerförmigen Lagerabschnitt 41 bzw. 43 ragen, wie Fig. 10 verdeutlichend erkennen lässt. Fig. 9 zeigt das so eingesetzte Eckstück 40 mit dem Scharnier 4 von der Frontseite aus.

Fig. 10 zeigt eine Steckaufnahme 47 zum Einführen des Lagerstückes 60 zum Festlegen eines Lagerzapfens 4.1 in dem Lagerabschnitt 41. Entsprechend wird auch der andere (untere) Lagerzapfen 4.1 in dem unteren Lagerabschnitt 43 drehbar festgelegt. Für die Drehlagerung sind die Lagerstücke 60 auf ihrer einführseitigen Stirnseite mit einer an die Rundung der Lagerzapfen 4.1 angepassten konkaven Rundung versehen. Der Montageabschnitt 4.2 wird an die Schrägfläche des vertikalen Rahmenschenkels in Anlage gebracht und mittels Schrauben über ein Befestigungselement 4.3 in Form von Gewindebohrungen an dem vertikalen Rahmenschenkel festgelegt.

Fig. 11 zeigt das an dem Vertikalprofil 20 und dem Horizontalprofil 30 montierte Eckstück 4 mit dem daran über das Lagerstück 60 und das Befestigungselement 61 montierten Scharnier 4. Auch hierbei ist zu sehen, wie der Kabelkanal 10 von dem Vertikalprofil 20 über das Eckstück 40 in den Kabelkanal des Horizontalprofils 30 übergeht.

Das Kabel kann insbesondere im Bereich der mit den Scharnieren 4 versehenen Vertikalseite aus dem Schaltschrankinneren in den Kabelkanal 10 eingeführt werden, und von dort z.B. zu dem elektronisch betätigbaren Türschloss oder zu Anzeigeelementen verlegt werden, um Aktoren des Verschlusses zu betätigen bzw. Anzeigeelemente anzusteuern. Umgekehrt können auch Sensorsignale über in dem Kabelkanal 10 verlegte Kabel zu einer Überwachungseinrichtung übertragen werden.

## Patentansprüche

1. Schaltschrank mit Verkleidungsteilen (7, 8) und mindestens einer Schranktür (1) aus Türblatt (3) und Türrahmen (2), der aus zwei Vertikalprofilen (20) und zwei Horizontalprofilen (30) gebildet ist,
**dadurch gekennzeichnet,**
**dass** in dem Türrahmen (2) ein auf seiner zur Schrankinnenseite gekehrten Rückseite offener oder mit einer abnehmbaren Abdeckung (50) versehener Kabelkanal (10) ausgebildet ist.

2. Schaltschrank nach Anspruch 1,
**dadurch gekennzeichnet,**
**dass** der Kabelkanal (10) in dem Türrahmen (2) in zumindest einem Vertikalprofil (20) und zumindest einem Horizontalprofil (30) ausgebildet ist, wobei ein jeweiliger fortlaufender Übergang zwischen dem Kabelkanal (10) des Vertikalprofils (20) und des Horizontalprofils (30) geschaffen ist.

3. Schaltschrank nach Anspruch 2,
**dadurch gekennzeichnet,**
**dass** der jeweilige Übergang des Kabelkanals (10) vermittels eines mit einem angepassten Abschnitt des Kabelkanals (10) versehenen Eckstückes (40) oder durch Gehrungsschnitt von Vertikalprofil (20) und Horizontalprofil (30) gebildet ist.

4. Schaltschrank nach einem der vorhergehenden Ansprüche,
**dadurch gekennzeichnet,**
**dass** der Kabelkanal (10) im Querschnitt viereckig mit zwei rechtwinklig zu der Türebene gerichteten Seitenwandabschnitten (13, 14) und einer parallel zur Türebene liegenden, von der Öffnungsebene des Kabelkanals (10) zur von der Schaltschrankinnenseite abgekehrten Frontseite der Tür (1) hin beabstandeten Basiswand (15) ausgebildet ist.

5. Schaltschrank nach einem der vorhergehenden Ansprüche,
**dadurch gekennzeichnet,**
**dass** entlang einem oder beider die Öffnungsseite begrenzender Ränder eine oder zwei längs verlaufende Haltenuten (11) zum Einstecken eines oder beider Ränder der Abdeckung (60) ausgebildet ist/sind und/oder
**dass** entlang einem oder beider die Öffnungsseite begrenzender Ränder eine oder zwei längs verlaufende Haltestege (12) ausgebildet sind und
**dass** die Abdeckung (50) in die mindestens eine Haltenut (11) und/oder an dem mindestens einen Haltesteg (12) einschnappbar ist.

6. Schaltschrank nach einem der vorhergehenden Ansprüche,
**dadurch gekennzeichnet,**
**dass** der Türrahmen (2) auf seiner den lichten Bereich umgebenden Innenseite mit einer umlaufenden Aufnahmenut (22) versehen ist, in die ein scheibenförmiges Türblatt (3) eingesetzt ist.

7. Schaltschrank nach einem der vorhergehenden Ansprüche,
**dadurch gekennzeichnet,**
**dass** der Türrahmen (2) auf seiner von dem lichten Rahmenbereich abgelegenen Außenseite mit einer flachen Außenseitenfläche (25) versehen ist, in der mindestens zwei Aussparungen (42) zum jeweiligen Einsetzen eines Scharniers (4) eingearbeitet sind.

8. Schaltschrank nach Anspruch 7,
**dadurch gekennzeichnet,**
**dass** die Aussparungen (42) in einem jeweiligen Eckstück (40) angeordnet sind.

9. Schaltschrank nach einem der vorhergehenden Ansprüche,
**dadurch gekennzeichnet,**
**dass** die beiden Vertikalprofile (20) in Bezug auf die beiden Horizontalprofile (30) unterschiedliche Querschnittsgestaltung besitzen.

10. Schaltschrank nach einem der vorhergehenden Ansprüche,
**dadurch gekennzeichnet,**
**dass** die Vertikalprofile (20) und die Horizontalprofile (30) auf ihrer von dem lichten Rahmenbereich abgelegenen Außenseite in von der Rahmen-Rückseite zur Rahmen-Frontseite gemessener Dickenrichtung eine größere Abmessung besitzen als auf ihrer dem lichten Rahmenbereich zugekehrten Innenseite.

11. Schaltschrank nach Anspruch 10,
**dadurch gekennzeichnet,**
**dass** die Abmessungen der Außenseite der Vertikalprofile (20) in Bezug auf diejenigen der Außenseite der Horizontalprofile (30) in Dickenrichtung größer sind.

12. Schaltschrank nach Anspruch 10 oder 11,
**dadurch gekennzeichnet,**
**dass** der Übergang der Vertikalprofile (20) und/oder der Horizontalprofile (30) auf deren Frontseite (31) von der Außenseite zur innenseite im Querschnitt konvex nach außen gewölbt verläuft oder zumindest abschnittsweise flach ist und
**dass** die Profile auf ihrer Rückseite flach ausgebildet sind und glatt ineinander übergehen.

13. Schaltschrank nach einem der vorhergehenden Ansprüche,
**dadurch gekennzeichnet,**
**dass** die Vertikalprofile (20) und die Horizontalprofile (30) außer dem Kabelkanal (10) zumindest eine weitere Profilkammer (24) aufweisen, die geschlossen ist.

14. Schaltschrank nach einem der Ansprüche 7 bis 13,
**dadurch gekennzeichnet,**
**dass** die Vertikalprofile (20) an den die Außenseitenfläche aufweisenden Außenwandabschnitt innen angrenzend mit einer Hohlkammer (26) versehen ist, die zur Frontseite im Querschnitt höckerförmig vorspringt und
**dass** auch die Querschnittsform des gegebenenfalls vorhandenen Eckstücks (40) in einem Vertikalschenkel entsprechenden Querschnitt besitzt.

15. Schaltschrank nach Anspruch 14,
**dadurch gekennzeichnet,**
**dass** die Scharniere (4) mit Lagerzapfen (4.1) oder eingebrachten Lageraugen im höckerförmigen Bereich des Hohlraums (26) gelagert sind.
